Europäisches Patentamt

European Patent Office

Office européen des brevets

(11) Veröffentlichungsnummer: **0 274 040**
**A1**

## (12) EUROPÄISCHE PATENTANMELDUNG

(21) Anmeldenummer: 87117276.3

(22) Anmeldetag: 24.11.87

(51) Int. Cl.⁴: **H04B 9/00** , G08C 23/00 ,
B65H 63/00 , D01H 13/32

(30) Priorität: 12.12.86 DE 3642540

(43) Veröffentlichungstag der Anmeldung:
13.07.88 Patentblatt 88/28

(84) Benannte Vertragsstaaten:
CH DE LI

(71) Anmelder: **Schubert & Salzer
Maschinenfabrik Aktiengesellschaft
Friedrich-Ebert-Strasse 84
D-8070 Ingolstadt(DE)**

(72) Erfinder: **Promoli, Johann-Christian, Dr.,
Dipl.-Ing.
Odilostrasse 54
D-8070 Ingolstadt(DE)**
Erfinder: **Dämmig, Joachim
Goethestrasse 149
D-8070 Ingolstadt(DE)**

(54) **Vorrichtung zur Erfassung von Betriebsdaten.**

(57) Bei einer Vorrichtung zum Erfassen von Betriebsdaten an Textilmaschinen mit einem Hauptrechner (1) und einem jeder Maschine zugeordneten Unterrechner (2 3) sind die Unterrechner (2 3) durch eine Informationssignale übertragende Ringleitung mit dem Hauptrechner (1) verbunden. Um eine große Anzahl von Datensignalen zwischen einer Vielzahl räumlich voneinander entfernten Maschinen störungsfrei zu übertragen ist jedem Unterrechner (2; 3) eine eigene Koppelkarte (20; 30) zum Wandeln von optischen Signalen in elektrische Signale und umgekehrt zugeordnet. Die Koppelkarten (20; 30) sind untereinander und mit dem Hauptrechner (1) durch Lichtleitkabel (7) verbunden.

EP 0 274 040 A1

## Vorrichtung zur Erfassung von Betriebsdaten

Die Erfindung betrifft eine Vorrichtung zur Erfassung von Betriebsdaten an Textilmaschinen, mit einem Hauptrechner und einem jeder Maschine zugeordneten Unterrechner, wobei die Unterrechner über eine Informationssignale übertragende Ringleitung mit dem Hauptrechner verbunden sind.

Bei bekannten Vorrichtungen zur Erfassung von Betriebsdaten der oben genannten Art erfolgt die Übertragung der Informationssignale durch Stromkabel (Zeitschrift "textil praxis international" 1983, Seite 663/667). Nachteilig dabei ist, daß sich induktive und kapazitive Felder störend auf die Signalübertragung auswirken und auch nur eine relativ geringe Anzahl von Daten übertragen werden kann, da sich bei hohen Übertragungsgeschwindigkeiten die Signalform ändert und damit die Datenübertragung unsicher wird.

Aufgabe der vorliegenden Erfindung ist es eine Vorrichtung zu schaffen, die es ermöglicht, eine große Anzahl von Datensignalen zwischen einer Vielzahl räumlich voneinander entfernter Textilmaschinen störungsfrei zu übertragen und dabei sicherzustellen, daß bei Außerbetriebnahme einzelner Unterrechner die Funktionstüchtigkeit der Vorrichtung erhalten bleibt.

Die Aufgabe wird erfindungsgemäß dadurch gelöst, daß jedem Unterrechner eine eigene Koppelkarte mit Mitteln zum Wandeln von optischen Signalen in elektrische Signale und umgekehrt zugeordnet ist und die Koppelkarten untereinander und mit dem Hauptrechner durch Lichtleitkabel verbunden sind, und daß jede Koppelkarte über ein eigenes Stromversorgungskabel an eine von der Maschine unabhängige Stromversorgung angeschlossen ist.

In vorteilhafter Weiterbildung der Erfindung wird vorgesehen, daß die Stromversorgungskabel parallel zu den Lichtleitkabeln verlaufen.

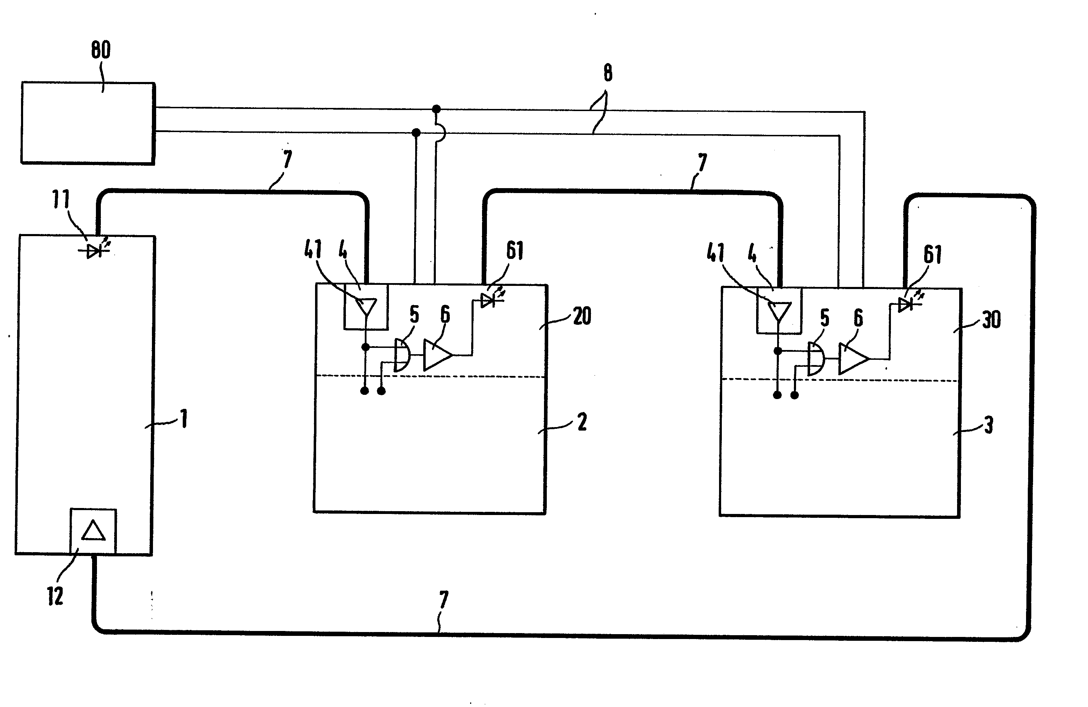

Ein Ausführungsbeispiel der Erfindung wird nachstehend anhand der Zeichnung beschrieben, die ein Blockschaltbild der Vorrichtung zeigt.

Die Erläuterung der Datenerfassung beschränkt sich auf zwei Maschinen, jedoch können und werden in der Praxis die Daten von wesentlich mehr Textilmaschinen mittels eines Hauptrechners 1 erfaßt. Jeder der beiden Maschinen ist ein Unterrechner 2 bzw. 3 und jedem der Unterrechner eine eigene Koppelkarte (Interface) 20 und 30 zugeordnet. Jede Koppelkarte 20 und 30 enthält einen optischen Empfänger 4 mit einem an eine Fotodiode (nicht gezeigt) angeschlossenen Treiber 41, dessen Ausgang mit dem Eingang des jeweiligen Unterrechners 2 und 3 verbunden ist. Der Treiber 41 ist ferner mit dem ersten Eingang eines ODER-Gliedes 5 und der Ausgang des Unterrechners 2 und 3 mit dem zweiten Eingang dieses ODER-Gliedes 5 verbunden. An das ODER-Glied 5 ist ein Treiberverstärker 6 angeschlossen, der einen optischen Sender 61 betreibt. Der Hauptrechner 1 enthält ebenfalls einen optischen Sender 11 und einen optischen Empfänger 12.

Die optischen Sender 11 und 61 sind mit den optischen Empfängern 4 und 12 durch Lichtleitkabel 7 in Form einer Ringleitung verbunden.

Im Betrieb werden die im Hauptrechner 1 und den Unterrechnern 2 und 3 gesammelten Informationen von den optischen Sendern 11 und 61 als Lichtsignale durch die Lichtleitkabel 7 den optischen Empfängern 4 und 12 zugeführt, wo sie in elektrische Signale umgewandelt werden. Die elektrischen Signale werden den Unterrechnern zugeführt. Diese geben ihrerseits die von ihnen gesammelten Informationen als elektrisches Signal ab, das dann zur Weiterleitung in ein Lichtsignal umgewandelt wird. Auf diese Weise bildet sich allmählich ein Informationspaket, das von der letzten im Ring befindlichen Maschine dann zum Hauptrechner 1 gelangt und von diesem für die Betriebsdatenerfassung verarbeitet wird.

Um sicherzustellen, daß die Ringleitung zur Lichtsignal-Übertragung auch dann in Betrieb bleibt, wenn einer der Unterrechner oder auch mehrere außer Betrieb genommen werden, ist jede Koppelkarte 20 und 30 über ein eigenes Stromversorgungskabel 8 an eine Stromversorgung 80 angeschlossen, die von der Maschine unabhängig ist. Der Anschluß der Stromversorgungskabel 8 an die Koppelkarten 20, 30 kann in beliebiger Weise erfolgen, beispielsweise auch sternförmig. Im Ausführungsbeispiel laufen die Stromversorgungskabel 8 parallel zu den Lichtleitkabeln 7. Diese Anordnung wird bevorzugt, weil auf diese Weise die Stromversorgungskabel 8 und die Lichtleitkabel 7 in einem gemeinsamen Führungsmittel, zweckmäßig einem Rohr, untergebracht werden können. Damit ist bei Spannungslosigkeit eines Unterrechners die Stromversorgung der für die optische Signalübertragung wichtigen Teile 4, 5, 6 und 61 gewährleistet.

### Ansprüche

1. Vorrichtung zur Erfassung von Betriebsdaten an Textilmaschinen mit einem Hauptrechner und einem jeder Maschine zugeordneten Unterrechner, wobei die Unterrechner durch eine Informationssignale übertragende Ringleitung mit dem Hauptrechner verbunden sind, **dadurch gekennzeichnet,** daß jedem Unterrechner (2, 3) eine eigene Koppelkarte (20, 30) zum Wandeln von optischen Signalen in elektrische Signale und umgekehrt zugeordnet ist und die Koppelkarten (20, 30) untereinander und mit dem Hauptrechner (1) durch Lichtleitkabel (7) verbunden sind, und daß jede Koppelkarte (20, 30) überein eigenes Stromversorgungskabel (8) an eine von der Maschine unabhängige Stromversorgung (80) angeschlossen ist.

2. Vorrichtung nach Anspruch 1, **dadurch gekennzeichnet,** daß die Stromversorgungskabel (8) parallel zu den Lichtleitkabeleln (7) verlaufen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | FORTSETZUNG AUS TPI, Nr. 6, Juli 1983, Seiten 663,664,667; G. MIERZOWSKY et al.: "Prozessunterstützung durch EDV in Spinnerei, Weberei und Veredlung" * Insgesamt * --- | 1,2. | H 04 B 9/00<br>G 08 C 23/00<br>B 65 H 63/00<br>D 01 H 13/32 |
| Y | US-A-4 531 240 (YOKOMIZO) * Spalte 2, Zeile 39 - Spalte 3, Zeile 42; Figuren 1,2 * ----- | 1,2 | |

RECHERCHIERTE
SACHGEBIETE (Int. Cl.4)

G 08 C
H 04 B
D 01 H

Der vorliegende Recherchenbericht wurde für alle Patentansprüche erstellt

| Recherchenort | Abschlußdatum der Recherche | Prüfer |
|---|---|---|
| DEN HAAG | 18-04-1988 | WANZEELE R.J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument